(19) Europäisches Patentamt
European Patent Office
Office européen des brevets

(11) Publication number: **0 130 007**
**B1**

(12) **EUROPEAN PATENT SPECIFICATION**

(45) Date of publication of patent specification: **07.03.90**

(51) Int. Cl.$^5$: **C 08 G 65/26,** C 08 G 18/50

(21) Application number: **84303935.5**

(22) Date of filing: **11.06.84**

# (54) Preparation of amino-polyols.

(30) Priority: **27.06.83 US 507815**

(43) Date of publication of application:
**02.01.85 Bulletin 85/01**

(45) Publication of the grant of the patent:
**07.03.90 Bulletin 90/10**

(84) Designated Contracting States:
**BE DE FR GB NL**

(56) References cited:
**EP-A-0 016 324**
**CH-A- 484 218**
**DE-A-1 493 891**
**US-A-3 297 597**
**US-A-3 933 698**
**US-A-4 239 907**

**The file contains technical information submitted after the application was filed and not included in this specification**

(73) Proprietor: **ARCO CHEMICAL TECHNOLOGY INC.**
**3 Christina Centre Suite 902 201 N Walnut Street**
**Wilmington Delaware 19801 (US)**

(72) Inventor: **McDaniel, Kenneth Grimes**
**97 Beauchamp Square**
**Round Rock Texas, 78664 (US)**

(74) Representative: **Cropp, John Anthony David et al**
**MATHYS & SQUIRE 10 Fleet Street**
**London, EC4Y 1AY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 130 007 B1**

Courier Press, Leamington Spa, England.

## Description

This invention relates to an improved process for producing amino polyols. In particular, the present invention relates to an improved process for making polyols which are used in preparing polyurethane foams. The process is an improvement over the prior art both in process energy consumption, and in yield from reactants.

The preparation of polyurethanes by reaction of a polyol with a polyisocyanate in the presence of a catalyst, and optionally other ingredients, is well known. Conventional polyols for use in preparing polyurethane foams are usually made by the reaction of a polyhydric alcohol with an alkylene oxide to a molecular weight of 2000 to 3000, or even more. These polyols are then reacted with polyisocyanate in the presence of water or other blowing agents such as fluorocarbons, to produce polyurethane foam.

Many different polyol initiators are known in the art. Polyol initiators which form linear or slightly branched polymers are moulded to produce flexible urethane foams. Polyol initiators which form more highly branched polymers are used to produce rigid foams.

The alkoxylation step in the preparation of any amino polyol is equilibrium-limited. The method used to remove unreacted alkylene oxide in present industrial practice is to strip off residual oxide, leaving the alkoxylated amino polyol.

Kirk-Othmer, *Encylopedia of Chemical Technology,* Second Edition, Vol. 16, page 598 and Stanford Research Institute, Report No. 45, *Polyols from Ethylene Oxide and Propylene Oxide,* both discuss generally the reaction of ammonia and amines with propylene oxide and ethylene oxide to form alkanolamines.

US—A—3 297 597 describes the reaction of an alkylene oxide with the Mannich condensation product of a phenolic compound with formaldehyde and an alkanolamine.

This invention relates to a method for preparing amino polyols which are useful in the production of polyurethane foams. These polyols are prepared by reacting and digesting an amino polyhydric initiator with one or more alkylene oxide groups to form a crude polyol mixture comprising an alkoxylated amino polyol having a hydroxyl number from 300 to 900, and residual alkylene oxide. The charactertic feature of the invention is that the residual alkylene oxide is reacted in situ with a second amine to form an alkanolamine. The alkanolamines thereby formed impart beneficial properties to polyurethane foams and therefore are not separated from the amino polyol. Instead, the alkanolamine and amino polyol are used together in a polyurethane foam process.

The present invention also relates to a process for preparing rigid polyurethane foams, using the mixture of alkanolamine and amino polyol produced by the above-described process.

The process of the invention comprises reacting an amino polyhydric initiator with an alkylene oxide selected from ethylene oxide, propylene oxide, 1,2-butylene oxide, styrene oxide, glycidol and mixtures thereof, at a temperature of 30°C to 180°C, to form a crude polyol mixture comprising an alkoxylated amino polyol having a hydroxyl number of 250 to 900, and residual alkylene oxide.

The present invention is characterized in that the residual alkylene oxide is reacted in situ with an added second amine at a temperature of 30°C to 180°C to form an alkanolamine. Selection of the amino polyhydric initiator is not critical, and any of the amino polyols particularly aromatic polyols are more particularly amino polyols which initiate highly branched polymers upon alkoxylation, will do. These amino polyol initiators have an active hydrogen functionality equal to or greater than three, and preferably from four to eight. Rigid amino polyol initiators have a hydroxyl number of typically from 300 to 900, and preferably from 300 to 800.

Polyhydric initiators which contain no nitrogen may be mixed with a first amine to make then amino polyhydric initiators. Particularly suitable polyhydric initiators have an active hydrogen functionality equal to or greater than 3. As with the rigid amino polyol initiators, they have a preferable functionality of four to eight and a hydroxyl number of typically from 300 to 900, and preferably from 300 to 800. The terms "polyhydric initiator" and "amino polyhydric initiator" are used interchangeably herein and in the art.

The most common rigid polyhydric initiators are carbohydrates, aromatic resins, amines and aromatic amines. Typical carbohydrate initiators are sucrose, sorbitol, methyl glucoside and starch glucosides. Examples of aromatic amines and aromatic resins useful in the present invention are Mannich condensates of phenolic compounds, aniline-formaldehyde condensates, phenol-formaldehyde condensates and mixed condensates of phenol-amines and formaldehyde. These rigid polyol initiators are illustrative only and the instances given above are not limitative.

If the polyhydric initiator contains no nitrogen, it is first mixed with a first amine. The first amine used in the present invention may be any one or more of a number of amines used in the art for preparing amino polyols. Most preferable is the selection of an alkanolamine, for general compatibility in the reaction sequence. Examples of alkanolamines used for this purpose are monoethanolamine, diethanolamine, triethanolamine, hydroxyethylaminoethyl ether, isopropanolamine, diisopropanolamine and triisopropanolamine.

Examples of other amines useful according to the present invention as the first amine are ammonia, methylamine, ethylenediamine, 1,3-propanediamine, diethylenetriamine, triethylenetetramine, hexaethyleneheptamine, imino-bis-propylamine, aminoethylethanolamine, benzylamine, piperazine, toluene diamine and aniline. These amines are illustrative only and the instances given are not limitative.

The amino polyhydric initiator is reacted under typical alkoxylation conditions with an alkylene oxide. Suitable alkylene oxides are ethylene oxide, propylene oxide, 1,2-butylene oxide, styrene oxide, glycidol and mixtures thereof. The resulting alkoxylated amino polyol has a hydroxyl number from 250 to 900, and most preferably from 350 to 800. Molecular weights are typically from 200 to 4000, and more preferably from 2000 to 3000. The alylene oxide is preferably propylene oxide, or a mixture of propylene oxide and ethylene oxide.

The alkoxylation is an equilibrium-controlled reaction. At typical reaction temperatures of 30 to 180°C, unreacted alkylene oxide remains mixed with alkoxylated amino polyol. By the present best conventional industrial practice, residual alkylene oxide is vented to a scrubber system and finally stripped to a low concentration, leaving the alkoxylated amino polyol/alkoxylated first amine product. The alkylene oxide thereby removed by scrubbing is then treated to make it safe for disposal.

An improvement has been found in the process for producing amino polyols which is surprising for its simplicity, and is synergistic in its immediate adaptability to present industrial practice. The improvement is energy-efficient, produces a better product for making urethane foams, and provides a better yield based on raw materials. The improvement comprises reacting the unreacted alkylene oxide with a second amine at a temperature of 30 to 180°C to form an alkanolamine.

The second amine may be ammonia, or a primary or secondary amine. The second amine is preferably ammonia, monoethanolamine, diethanolamine or triethanolamine. It may alternatively be methylamine, ethylenediamine, 1,3-propanediamine, diethylenetriamine, triethylenetetramine, hexaethyleneheptamine, imino-bis-propylamine, isopropanolamine, diisopropanolamine, aminoethylethanolamine, benzylamine, piperazine, toluene diamine or aniline.

In the practice of this invention, the second amine, preferably ammonia or a primary or a secondary amine, is charged to the reactor at the end of the normal alkylene oxide-digestion step, and the amine or ammonia scavenges the residual alkylene oxide, while the resulting alkanolamine becomes one of the components of the polyol mixture. Alkanolamines are beneficial components of polyols for use in the production of polyurethanes, particularly rigid urethanes, and therefore constitutes a higher quality product.

The invention reduces production costs by lowering raw material loss, by reducing the energy cost of stripping polyol product and by reducing the associated environmental cost, which at present results from scrubbing and disposal or reclamation of the resulting material.

The present invention is equally adaptable to methods for preparing polyols for use in rigid polyurethane foams involving Mannich condensation. Mannich condensation polyols are more fully discussed in US—A—3 297 597.

In another embodiment of the present invention, therefore the aminoe polyhydric initiator is obtained by reacting a phenol, a first alkanolamine, and formaldehyde, at a temperature of from 50 to 150°C for a period of time sufficient to reduce the formaldehyde content to no more than about 1%, stripping water form the reaction product, which is reacted at a temperature of 30 to 180°C with an alkylene oxide selected from ethylene oxide, propylene oxide, 1,2-butylene oxide, styrene oxide, glycidol and mixtures thereof, to form a crude polyol mixture comprising an alkoxylated amino polyol with a hydroxyl number of 300 to 900, and preferably 300 to 800, and residual akylene oxide. The latter is then reacted, in situ, according to the invention with a second amine at a temperature of 30 to 180°C to form an alkanolamine. The modified amino polyol produced in this manner is especially suitable for the production of rigid polyurethane foams.

The polyol initiator that is employed in accordance with this embodiment of the present invention is obtained by the addition, at a temperature from 30 to 180°C, of an alkylene oxide to a Mannich condensation product of a phenolic compound with formaldehyde and an alkanolamine. These polyols have hydroxyl numbers of from 300 to 900 and generally a nitrogen content of from 1 to 15 wt. %.

The Mannich reaction is a well-known reaction wherein an active hydrogen compound is reacted with formaldehyde and a primary or secondary amine to provide a substituted aminomethyl derivative of the active hydrogen-containing starting material. The Mannich derivative to be employed as a starting material for the preparation of the polyols of the present invention, is prepared in accordance with the customary procedure using a phenolic compound, as described hereinbelow, as the active hydrogen compound. The *ortho-* and *para*-positions of these phenolic compounds are sufficiently reactive to enter into the Mannich reaction.

For example, the Mannich reaction may be conducted by premixing the phenolic compound with a desired amount of the alkanolamine, and then slowly adding formaldehyde to the mixture. At the end of the formaldehyde addition, the reaction mixture is slowly heated with agitation to a temperature of at least 50°C, such as a temperature within the range from 80 to 150°C, for a period of time sufficient to reduce the formaldehyde content to at least 1 wt. %. This will require normally a reaction time from 2 to 4 hours at the elevated temperature.

At the end of the reaction, water is stripped from the reaction mixture to provide thereby a crude Mannich reaction product. Although it is within the scope of the present invention to separate the crude reaction product by conventional means into specific components or fractions, it is a feature of the present invention that the entire crude Mannich reaction product may be used as such, without attempting to isolate the individual components thereof. In fact, in accordance with the preferred embodiment of the present invention, the entire crude Mannich reaction product is used as such, and when this is done

positive steps should be taken in order to provide the reaction product from containing less than 1 wt. % of free formaldehyde.

The phenolic compound to be employed in the Mannich condensation is an aromatic compound containing one or more hydroxyl groups attached directly to the aromatic nucleus and having a hydrogen atom on one or more of the ring positions *ortho-* and *para-* to the hydroxyl group, and which is otherwise unsubstituted or substituted only with substituent groups which are non-reactive under Mannich reaction conditions. Substituent groups that may be present include alkyl, cycloalkyl, aryl, halo, nitro, carboalkoxy, haloalkyl and hydroxyalkyl. The phenolic compound is further characterized by having a molecular weight of from 94 to 500. Examples of acceptable phenolic compounds include *0-*, *m-*, and *p*-cresols, ethylphenol, nonylphenol, *p*-phenylphenol, 2,2-bis(4-hydroxyphenyl) propane, β-naphthol, β-hydroxy-anthracene, *p*-chlorophenol, *o*-bromophenol, 2,6-dichlorophenol, *p*-nitrophenol, 4-nitro-6-phenylphenol, 2-nitro-4-methylphenol, 3,5-dimethylphenol, *p*-isopropylphenol, 2-bromo-4-cyclohexylphenol, 2-methyl-4-bromophenol, 2-(2-hydroxypropyl)phenol, 2-(4-hydroxyphenyl)ethanol, 2-carbethoxyphenol and 4-chloromethylphenol.

The alkanolamine to be reacted with the phenolic compound and formaldehyde in accordance with the present invention is an alkanolamine as previously defined.

Examples of other suitable alkanolamines are alkanolamines having the formula:

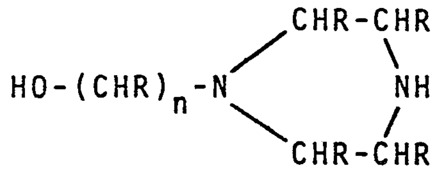

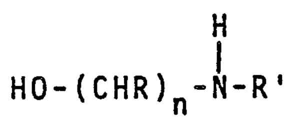

wherein R is hydrogen of $C_1$—$C_4$ alkyl, R′ is hydrogen, $C_1$—$C_4$ or —$(CHR)_n$—OH, and *n* is a positive integer from 2 to 5.

Examples of suitable alkanolamines that may be used are monoethanolamine, diethanolamine, isoropanolamine, bis(2-hydroxypropyl)amine, hydroxyethylmethylamine, N-hydroxyethylpiperazine, N-hydroxybutylamine, and N-hydroxyethyl-2,5-dimethylpiperazine.

Formaldehyde may be employed in the Mannich reaction in any of its conventional forms, such as an aqueous formalin solution, and "inhibited" methanol solution, paraformaldehyde or trioxane.

The characteristics of the Mannich product, and consequently the characteristics of the alkylene oxide adduct of the Mannich product, may be varied over wide limits by appropriate choice of the phenolic compound and alkanolamine employed, and by varying the molar ratios of the reactants. For example, if phenol, diethanolamine and formaldehyde are employed in a molar ratio of 1:3:3, the predominant product will have seven hydroxyl groups attached to a single molecule. If the molar ratio of these same reactants is changed to 1:2:2, a pentol will be obtained as the predominant product. Similarly, when the molar ratio is 1:1:1, a triol is the predominant product.

If an excess of formaldehyde is used in the preparation of the triol or pentol, the Mannich reaction becomes complex due to the secondary condensation of phenol and formaldehyde. This is the well-known Novolak reaction, which leads to polymethylene derivatives of phenol. For example, when phenol, diethanolamine and formaldehyde are reacted in a molar ratio of 1:1:2, the normal Mannich reaction occurs in one of the three active positions. This leaves two available active positions on the phenol nucleus to undergo condensation with the excess formaldehyde. The presence of the amine groups affords sufficient base catalysis to promote the phenol-formaldehyde condensation leading to a complex reaction product.

In accordance with the present invention, the Mannich reaction product is reacted with an alkylene oxide to provide the final polyol. The nitrogen present in the Mannich condensate has sufficient catalytic activity to promote the reaction of one mole of the alkylene oxide with each free amino hydrogen atom and phenolic and primary hydroxyl group, and no additional catalyst is needed. The alkoxylation is conducted at a temperature of 30 to 180°C, leading to formation of a product, which is defined herein for the purpose of this application as an "alkylene oxide adduct of the Mannich reaction product of a phenolic compound with formaldehyde and an alkanolamine".

It is, of course, possible to add less than one mol of alkylene oxide per free phenolic and primary hydroxyl group in the Mannich condensation product. The minimum desirable mount of alkylene oxide is, however, one mol per free amino hydrogen atom and phenolic hydroxyl group. In general, phenolic hydroxyl groups form unstable urethane linkages, and so are to be avoided where possible. Generally, more than the minimum mount of alkylene oxide is used to obtain a product having a lower hydroxyl number and lower viscosity.

For example, a desirable product is that obtained by the addition of five mols of propylene oxide

(rather than the maximum of seven or minimum of one) to the heptol obtained by the Mannich condensation of phenol, formaldehyde and diethanolamine in a molar ratio of 1:3:3.

Alkylene oxides are as previously defined including heteric or blocked mixtures thereof.

The nitrogen containing polyols of the invention may be specifically used to prepare a rigid polyurethane foam by reacting an organic polyisocyanate with a polyol component comprising from 30 to 100 wt. % of said nitrogen-containing polyol having a hydroxyl number of from 300 to 900 and a nitrogen content of from 1 to 15 wt. % and, correspondingly, up to 70 wt. % of a second polyol.

This invention is further demonstrated in the following Examples which are included by way of illustration only:

## Example 1

Control A—1

An aqueous Mannich condensate (11.12 Kg), prepared by the reaction of one mol of phenol, one mol of formaldehyde, and one mol of diethanolamine, was charged to a jacketted pressure reactor equipped with a heat exchanger, temperature sensors, pressure gauges, vacuum stripping equipment, stirrer, oxide feed stystems, nitrogen blanketing system and raw material charge ports.

After the Mannich condensate was stripped to approximately 0.5% of water, 6.04 Kg of propylene oxide and 0.91 Kg of ethylene oxide were charged by block addition over a temperature range of 90 to 115°C, and then the mixture was digested for 1.5 hours at 115 to 130°C.

The resulting polyol exhibited a hydroxyl number of 495 mg KOH/g and a viscosity of 5700mPas (cps) at 25°C. Based on the oxide recovered, the total oxide utilization was 94.9%.

Example A—2

The above precedure was repeated, except that after one hour of alkylene oxide digestion, 0.16 Kg of monoethanolamine was added, and then the digestion was continued for 0.5 hours. The resulting polyol had a hydroxyl number of 524 mg KOH/g and a viscosity of 5920mPas (cps) at 25°C. Based on the oxide recovered, the oxide utilization was calculated to be 98.4%.

## Example 2

Control B—1

A Mannich condensate was prepared by the combination of one mol of nonylphenol, 1.5 mols of formaldehyde, and 2 mols of diethanolamine. The condensate as alkoxylated as in example A—1, except that 82% of propylene oxide, and 18% of ethylene oxide, were added as blocks over a temperature range of 96 to 120°C. After completing the addition, the mixture was digested for 2 hours, at which time the reactor pressure was essentially constant. The oxide and low boiling material were removed by evacuating to 2666 Pa at 120°C. The product polyol had a hydroxyl number of 481 mg KOH/g and a viscosity of 8850 mPas (cps) at 25°C. The light material and oxide was equivalent to 3% of the oxide charge.

Example B—2

The procedure given in B—1 was repeated, except that 0.59 Kg of diethanolamine and 14 g of water were added, the initial alkylene oxide charge being 16.03 Kg. The diethanolamine was added after 1.5 hours of digestion of alkylene oxide, and the digestion was continued for 0.5 hours after the diethanolamine addition. The light materials removed by stripping were equivalent to 0.8% of the oxide charge. The resulting polyol had a hydroxyl number of 467 mg KOH/g and viscosity of 9400 mPas (cps) at 25°C.

## Example 3

Control C—1

A Mannich condensate as described in B—1 was propoxylated to yield a polyol with a hydroxyl number of 473 mg KOH/g and a viscosity of 15,600 mPas (cps) at 25°C. The oxide and light material stripped were equal to 12.2% of the oxide charge.

Example C—2

The procedure given in C—1 was repeated, except that after the digestion period was 75% complete, 1.36 Kg of diethanolamine and 25 grams of water were charged for each 15.89 Kg of propylene oxide initially charged. The resulting polyol had a hydroxyl number of 518 mg KOH/g and a viscosity of 12,500 mPas (cps) at 25°C. The oxide and light materials recovered were equivalent to 4.3% of the original propylene oxide charged.

**Claims**

1. A process for preparing an amino polyol by reacting an amino polyhydric initiator with an alkylene oxide selected from ethylene oxide, propylene oxide, 1,2-butylene oxide, styrene oxide, glycidol and mixtures thereof, at a temperature of 30°C to 180°C, to form a crude polyol mixture comprising an alkoxylated amino polyol having a hydroxyl number of 250 to 900, and residual alkylene oxide; characterized in that the residual alkylene oxide is reacted in situ with an added second amine at a temperature of 30°C to 180°C to form an alkanolamine.

2. A process according to Claim 1 characterized in that the initiator is a sucrose polyol mixed with a first amine.

3. A process according to Claim 2 characterized in that the first amine is an alkanolamine.

4. A process according to Claim 2 characterized in that the first amine is ammonia, methylamine, ethylenediamine, isopropanolamine, diisopropanolamine, triisopropanolamine, 1,3-propanediamine, diethylenetriamine, triethylenetetramine, hexaethyleneheptamine, imino-bis-propylamine, monoethanolamine, diethanolamine, triethanolamine, aminoethylethanolamine, benzylamine, piperazine, toluene diamine, aniline or hydroxyethyl aminoethyl ether.

5. A process according to any preceding Claim characterized in that the second amine is ammonia, a primary amine or a secondary amine.

6. A process according to Claim 5 characterized in that the second amine is ammonia, methylamine, ethylenediamine, 2,3-propanediamine, diethylenetriamine, triethylenetetramine, hexaethyleneheptamine, imino-bis-propylamine, monoethanolamine, diethanolamine, triethanolamine, isopropanolamine, diisopropanolamine, triisopropanolamine, aminoethylethanolamine, benzylamine, piperazine, toluene diamine or aniline.

7. A process according to Claim 1 characterized in that the amino polyhydric initiator is an aromatic amino polyol.

8. A process according to Claim 1 characterized in that the initiator is selected from a Mannich condensate of a phenolic compound, an aniline-formaldehyde condensate, a phenol-formaldehyde condensate or a mixed condensate of phenol, aniline and formaldehyde.

9. A process according to Claim 1, characterized in that amino polyhydric initiator is prepared by heating a mixture of a phenol, a first alkanolamine, and formaldehyde, at a temperature of from 50°C to 150°C for a period of time sufficient to reduce the formaldehyde content to no more than 1%, and stripping water from the reaction product.

10. A process according to Claim 3 or Claim 9 characterized in that the alkanolamine has the formula

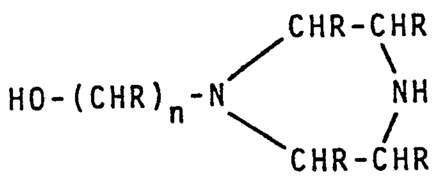

or

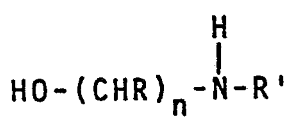

wherein R is hydrogen or $C_1$—$C_4$ alkyl, R′ is hydrogen, $C_1$—$C_4$ alkyl or $—(CHR)_n—OH$, and n is a positive integer from 2 to 5.

11. A process for preparing a rigid polyurethane foam by reacting an organic polyisocyanate with a polyol component comprising from 30 to 100 wt. % of a nitrogen-containing polyol having a hydroxyl number of from 300 to 900 and a nitrogen content of from 1 to 15 wt. % and, correspondingly, up to 70 wt. % of a second polyol characterized in that the nitrogen-containing polyol is a material preparable by a process according to any of the preceding Claims.

**Patentansprüche**

1. Verfahren zur Herstellung eines Aminopolyols durch Umstzen eines Aminopolyhydroxy-Initiators mit einem Alkylenoxid, ausgewählt aus Ethylenoxid, Propylenoxide, 1,2-Butylenoxid, Styroloxid, Glycidol und deren Mischungen, bei einer Temperatur von 30°C bis 180°C, um eine rohe Polyolmischung zu bilden, die einen alkoxylierten Aminopolyol mit einer Hydroxylzahl von 250 bis 900 und restliches Alkylenoxid enthält, dadurch gekennzeichnet, daß das restliche Alkylenoxid in situ mit einem zugegebenen zweiten Amin bei einer Temperatur von 30°C bis 180°C zur Bildung von Alkanolamin umgesetzt wird.

2. Verfahren nach Anspruch 1, dadurch gekennzeichnet, daß der Initiator ein Sucrosepolyol gemischt mit einem ersten Amin ist.

3. Verfahren nach Anspruch 2, dadurch gekennzeichnet, daß das erste Amin ein Alkanolamin ist.

4. Verfahren nach Anspruch 2, dadurch gekennzeichnet, daß das erste Amin Ammoniak, Methylamin, Ethylendiamin, Isopropanolamin, Diisopropanolamin, Triisopropanolamin, 1,3-Propandiamin, Diethylentriamin, Triethylentetramin, Hexaethylenheptamin, Imino-Bis-propylamin, Monoethanolamin, Diethanolamin, Triethanolamin, Aminoethylethanolamin, Benzylamin, Piperazin, Toluoldiamin, Anilin oder Hydroxyethylaminoethylether ist.

5. Verfahren nach einem der vorhergehenden Ansprüche, dadurch gekennzeichnet, daß das zweite Amin Ammoniak, ein primäres oder sekundäres Amin ist.

6. Verfahren nach Anspruch 5, dadurch gekennzeichnet, daß das zweite Amin Ammoniak, Methylamin,

Ethylendiamin, 1,3-Propandiamin, Diethylenetriamin, Triethylentetramin, Hexaethylenheptamin, Imino-Bis-Propylamin, Monoethanolamin, Diethanolamin, Triethanolamin, Isopropanolamin, Diisopropanolamin, Triisopropanolamin, Aminoethylethanolamin, Benzylamin, Piperazin, Toluoldiamin oder Anilin ist.

7. Verfahren nach Anspruch 1, dadurch gekennzeichnet, daß der Aminopolyhydroxy-Initiator ein aromatischer Aminopolyol ist.

8. Verfahren nach Anspruch 1, dadurch gekennzeichnet, daß der Initiator aus einem Mannich Kondesat einer phenolischen Verbindung, einem Anilin-Formladehyd Kondensat, einem Phenol-Formaldehydkondensat oder einem gemischten Kondensat aus Phenol Anilin und Formaldehyd ausgewählt wird.

9. Verfahren nach Anspruch 1, dadurch gekennzeichnet, daß der Aminopolyhydroxy Initiator durch Erhitzen einer Mischung aus einem Phenol, einem ersten Alkanolamin und Formaldehyd bei einer Temperatur von 50°C bis 150°C für einen Zeitraum, der ausreicht, um den Formaldehydgehalt auf nicht mehr als 1% zu reduzieren und Entfernung des Wassers aus dem Reaktionsprodukt, hergestellt wird.

10. Verfahren nach Anspruch 3 oder 9, dadurch gekennzeichnet, daß das Alkanolamin die folgende Formel aufweist:

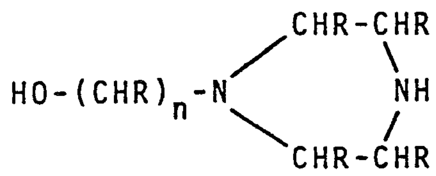

oder

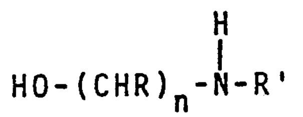

in der R Wasserstoff oder $C_1$ bis $C_4$-Alkyl ist, R' Wasserstoff, $C_1$ bis $C_4$-Alkyl oder $-(CHR)_n-OH$ ist und n eine positive Zahl von 2 bis 5 ist.

11. Verfahren zur Herstellung eines harten Polyurethanschaums durch Umsetzen eines organischen Polyisocyanats mit einer Polyolkomponente, enthaltend 30 bis 100 Gew.-% eines stickstoffhaltigen Polyols mit einer Hydroxylzahl von 300 bis 900 und einen Stickstoffgehalt von 1 bis 15 Gew.-% und, entsprechend, bis zu 70 Gew.-% eines zweiten Polyols, dadurch gekennzeichnet, daß der stickstoffhaltige Polyol ein durch ein Verfahren nach einem der vorhergehenden Ansprüche herstellbares Material ist.

**Revendications**

1. Procédé pour préparer un aminopolyol par réaction d'un initiateur amino polyhydrique avec un oxyde d'alkylène choisi parmi l'oxyde d'éthylène, l'oxyde de propylène, l'oxyde de 1,2-butylène, l'oxyde de styrène, le glycidol et leurs mélanges, à une température de 30°C à 180°C pour former un mélange brut de polyol comprenant un aminopolyol alcoxylé ayant un nombre d'hydroxy de 250 à 900, et de l'oxyde d'akylène résiduaire, caractérisé en ce que l'on fait réagir in situ l'oxyde d'alkylène résiduaire avec une seconde amine ajoutée à une température de 30°C à 180°C pour former une alcanolamine.

2. Procédé suivant la revendication 1, caractérisé en ce que l'initiateur est un sucrose polyol mélangé à une première amine.

3. Procédé suivant la revendication 2, caractérisé en ce que la première amine est une alcanolamine.

4. Procédé suivant la revendication 2, caractérisé en ce que la première amine est l'ammoniac, la méthylamine, l'éthylènediamine, l'isopropanolamine, la diisopropanolamine, la triisopropanolamine, la 1,3-propanediamine, la diéthylènetriamine, la triéthylènetétramine, l'hexaéthylèneheptamine, l'imino-bis-propylamine, la monoéthanolamine, la diéthanolamino, la triéthanolamine, l'aminoéthyléthanolamine, la benzylamine, la pipérazine, la toluène diamine, l'aniline ou l'éther aminoéthylique d'hydroxyéthyle.

5. Procédé suivant l'une quelconque des revendications précédentes, caractérisé en ce que la seconde amine est l'ammoniac, une amine primaire ou une amine secondaire.

6. Procédé suivant la revendication 5, caractérisé en ce que la seconde amine est l'ammoniac, la méthylamine, l'éthylènediamine, la 1,3-propanediamine, la diéthylènetriamine, la triéthylènetétramine, l'hexaéthylèneheptamine, l'imino-bis-propylamine, la monoéthanolamine, la diéthanolamine, la triéthanolamine, l'isopropanolamine, la diisopropanolamine, la triisopropanolamine, l'aminoéthyléthanolamine, la benzylamine, la pipérazine, la toluène diamine ou l'aniline.

7. Procédé suivant la revendication 1, caractérisé en ce que l'initiateur amino polyhydrique est un aminopolyol aromatique.

8. Procédé suivant la revendication 1, caractérisé en ce que l'initiateur est choisi parmi un condensat de Mannich d'un composé phénolique, un condensat d'aniline-formaldéhyde, un condensat de phénol formaldéhyde ou un condensat mixte de phénol, d'aniline et de formaldéhyde.

9. Procédé suivant la revendication 1, caractérisé en ce que l'initiateur amino polyhydrique est préparé par chauffage d'un mélange d'un phénol, d'une première alcanolamine et de formaldéhyde à une température de 50°C à 150°C pendant une période de temps suffisante pour réduire la teneur en

formaldéhyde à une valeur dépassant pas 1%, et extraction de l'eau du produit réactionnel.

10. Procédé suivant la revendication 3 ou la revendication 9, caractérisé en ce que l'alcanolamine est représenté par la formule

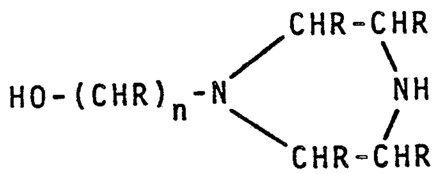

ou

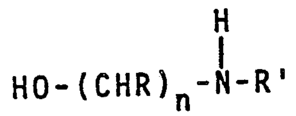

où R est un atome d'hydrogène ou un groupe alkyle en $C_{1-4}$, R' est un atome d'hydrogène, un groupe alkyle en $C_{1-4}$ ou $-(CHR)_n-OH$, et n est entier positif de 2 à 5.

11. Procédé pour préparer une mousse de polyuréthane rigide par réaction d'un polyisocyanate organique avec un composant polyol comprenant de 30 à 100% en poids d'un polyol contenant de l'azote, ayant un nombre d'hydroxy de 300 à 900 et une teneur en azote de 1 à 15% en poids, et de façon correspondante, jusqu'à 70% en poids d'un second polyol, caractérisé en ce que le polyol contenant de l'azote est une matière pouvant être préparée selon un procédé suivant l'une quelconque des revendications précédentes.